# EUROPÄISCHE PATENTSCHRIFT

(11) **EP 3 929 139 B1**
(45) Veröffentlichungstag und Bekanntmachung des Hinweises auf die Patenterteilung: **13.03.2024**
(21) Anmeldenummer: 21175127.6
(22) Anmeldetag: 20.05.2021
(51) Int. Cl.: B66C 13/08, B66C 13/46, B64D 1/22

(54) **TRANSPORTSYSTEM ZUM BEFÖRDERN EINER LASTVORRICHTUNG, VERFAHREN ZUM STEUERN EINES TRANSPORTSYSTEMS UND LUFTFAHRZEUG MIT EINEM TRANSPORTSYSTEM**
TRANSPORT SYSTEM FOR TRANSPORTING A LOAD DEVICE, METHOD FOR CONTROLLING A TRANSPORT SYSTEM AND AIRCRAFT WITH A TRANSPORT SYSTEM
SYSTÈME DE TRANSPORT PERMETTANT DE TRANSPORTER UN DISPOSITIF DE CHARGE, PROCÉDÉ DE COMMANDE D'UN SYSTÈME DE TRANSPORT ET AÉRONEF DOTÉ D'UN SYSTÈME DE TRANSPORT

(30) Priorität: 22.06.2020 DE 102020116443
(43) Veröffentlichungstag der Anmeldung: 29.12.2021
(73) Patentinhaber: Airbus Defence and Space GmbH, 82024 Taufkirchen (DE)
(72) Erfinder: SCHWEIZER, Romed, 82024 Taufkirchen (DE); MAYR, Sebastian, 82024 Taufkirchen (DE)
(74) Vertreter: LKGLOBAL Lorenz & Kopf Patentanwalt Attorney at Law PartG mbB

(56) Entgegenhaltungen:
- EP-A1- 3 228 577
- WO-A1-00/23347
- US-A1- 2007 200 032
- US-B1- 9 223 008

## Beschreibung

### Gebiet der Erfindung

Die vorliegende Erfindung betrifft Befestigungsverfahren zum Befestigen von Lasten für den Transport. Insbesondere betrifft die Erfindung ein Transportsystem zum Befördern einer Lastvorrichtung, ein Verfahren zum Steuern eines Transportsystems sowie ein Luftfahrzeug mit einem Transportsystem.

### Hintergrund der Erfindung

Die Beförderung von Lasten, beispielsweise Containern, kommt in einer Vielzahl von technischen Gebieten zum Einsatz. Beispielsweise können Lasten mit Hilfe von Baukränen oder Helikoptern befördert und durch die Luft transportiert werden. Von besonderer Bedeutung ist dabei die präzise und sichere Befestigung der Lasten, beispielswiese an Hakenvorrichtungen und dergleichen. Da diese Hakenvorrichtungen zum Befestigen der Last oftmals an flexiblen oder sogar schwingenden Führungseinheiten, wie zum Beispiel Seilen oder Ketten, angebracht sind, kann es schwierig sein, diese Hakenvorrichtungen mittels herkömmlicher Steuerungsverfahren an der zu befördernden Last zu befestigen. Wird beispielsweise ein Baukran oder ein Helikopter über der Last positioniert, so ist das Greifen der Last mittels der Hakenvorrichtung durch das Schwingen des Seils oder der Kette erschwert. Eine solche Hakenvorrichtung wird üblicherweise manuell durch Hilfspersonal am Boden positioniert und ausgerichtet, um die Last in die Hakenvorrichtung einhängen zu können.

EP 2 338 794 A1 und US 2011 / 0 147 328 A1 beschreiben eine Hebevorrichtung zum Ersetzen dynamischer oder statischer Komponenten von Drehflügelflugzeugen. Die Hebevorrichtung umfasst ein Hebemittel, um die Komponenten zwischen einer Installations- oder Entnahmeposition und einer Lade- oder Entladeposition in der Nähe des Flugzeugs zu bewegen. Die Hebevorrichtung umfasst auch eine Stützstruktur, auf der das Hebemittel montiert ist, und eine Stützeinrichtung, die starr an der Stützstruktur angebracht ist und so ausgelegt ist, dass sie auf dem Flugzeugrahmen des Flugzeugs aufliegt und direkt an diesem befestigt ist.

US 9 223 008 B1 beschreibt ein Verfahren zum Stabilisieren einer an einem Seil, Kabel, Netz, einer Schlinge oder dergleichen aufgehängten Last. Eine Bake mit einer Vielzahl von Lichtern kann an der Last relativ zu dem Befestigungspunkt an der Last, an einem Befestigungspunkt der Last oder an dem Seil, der Kabelschlinge oder dergleichen befestigt werden. Ein Sensor an der Hebevorrichtung erfasst die Bake und somit jede Schwingungsbewegung der Last, und ein auf den Sensor ansprechender Prozessor stellt Steuersignale bereit, die die Bewegung der Hebevorrichtung lenken, um Schwingungsbewegungen der Last zu dämpfen.

US 2007/200032 A1 beschreibt ein Flugzeugfrachtmanagementsystem, das die Position eines Flugzeugfrachthakens zur Anzeige für eine Flugzeugbesatzung bestimmt. Die Frachthaken-Positionsinformationen können alternativ oder zusätzlich direkt an ein Flugsteuerungssystem und ein Windensteuerungssystem kommuniziert werden, sodass Flugsteuerungseingaben mit dem Windenbetrieb automatisiert und koordiniert werden können, um den Frachthaken aktiv zu positionieren. Die Datenübertragung von der Fracht über ein Datenverbindungssystem versorgt das Frachtmanagementsystem auch mit der genauen Position der Frachtverbindungspunkte vor dem Anbringen des Frachthakens an der Fracht. Das Frachtmanagementsystem umfasst auch Antischwankungsalgorithmen für aktive Frachtstabilitätseingaben in das Flugsteuerungssystem und zum Ändern von Flugsteuerungsgesetzen und zum automatischen Kompensieren von Schwerpunktabweichungen.

EP 3 228 577 A1 beschreibt Systeme und Verfahren zum Betreiben einer Hebezeug- und Hakenanordnung, wobei eine Position eines Ziels unter Verwendung eines Positionssensors bestimmt wird. Eine Hakenanordnung kann als Reaktion auf die Position des Ziels positioniert werden, wie es durch den Positionssensor erfasst wird. Das Positionieren der Hakenanordnung kann das Auslenken eines mit einer Winde gekoppelten Auslegers unter Verwendung einer oder mehrerer lokaler Schubquellen an der Hakenanordnung und/oder das Bewegen einer Luftfahrzeugzelle relativ zu der Position des Ziels umfassen.

### Zusammenfassung der Erfindung

Es ist eine Aufgabe der vorliegenden Erfindung, das Befestigen von Lasten an beweglichen Transportsystemen zu erleichtern.

Diese Aufgabe wird durch die Gegenstände der unabhängigen Ansprüche gelöst. Beispielhafte Ausführungsformen ergeben sich aus den abhängigen Ansprüchen und der nachfolgenden Beschreibung.

Gemäß einem Aspekt der Erfindung ist ein Transportsystem zum Befördern einer Last, das heißt einer Lastvorrichtung, angegeben. Das Transportsystem umfasst eine Transportvorrichtung sowie eine Befestigungsvorrichtung, welche beweglich an der Transportvorrichtung befestigt ist und welche dazu ausgeführt ist, die Lastvorrichtung an der Transportvorrichtung zu befestigen. Das Transportsystem umfasst ferner eine erste Erfassungseinheit, welche dazu ausgeführt ist, eine Abweichung zwischen einer Ist-Position der Befestigungsvorrichtung von einer Soll-Position der Befestigungsvorrichtung zu bestimmen. Das Transportsystem umfasst ferner eine Steuerungseinheit, welche dazu ausgeführt ist, eine Bewegung der Befestigungsvorrichtung zu beeinflussen, um die bestimmte Abweichung zwischen der Ist-Position der Befestigungsvorrichtung von der Soll-Position der Befestigungsvorrichtung zu kompensieren. Die erste Erfassungseinheit ist ferner dazu ausgeführt, ein mit der Lastvorrichtung korrespondierendes Markierungselement zu erfassen. Die Steuerungseinheit ist dazu ausgeführt, basierend auf dem erfassten Markierungselement eine räumliche Positionierung der Befestigungsvorrichtung in Bezug auf die Lastvorrichtung vorzunehmen. Das Markierungselement enthält eine Information über einen Bewegungsablauf zur Befestigung der Lastvorrichtung an der Befestigungsvorrichtung und die Steuerungseinheit ist dazu ausgeführt, basierend auf dieser Information die Befestigungsvorrichtung gemäß dem Bewegungsablauf zu bewegen.

Das erfindungsgemäße Transportsystem unterstützt das Befestigen von Lasten, insbesondere wenn die Position oder Orientierung des Transportsystems oder Teile desselben aufgrund äußerer Einflüsse beeinflusst bzw. verändert werden. Eine solche sich verändernde Position oder Orientierung des Transportsystems, an dem die Last befestigt werden soll, kann beispielsweise durch Schwingungen oder Auslenkungen verursacht sein. Dabei kann es zu ungewollten Schwingungen oder Auslenkungen der Befestigungsvorrichtung, das heißt der Hakenvorrichtung, kommen, mittels welcher die Last an der Transportvorrichtung und damit am Transportsystem befestigt wird. Diese Schwingungen oder Auslenkungen der Befestigungsvorrichtung können beispielsweise durch Winde hervorgerufen werden, denen die Befestigungsvorrichtung ausgesetzt ist, oder aber durch Bewegungsmanöver des Transportsystems. Insbesondere können Schwingungen oder Auslenkungen der Befestigungsvorrichtung durch die Steuerung des Transportsystems selbst oder von Teilen desselben hervorgerufen werden. Das Transportsystem ermöglicht ferner eine Identifikation einer Lastvorrichtung mit Hilfe des erfassten Markierungselements, beispielsweise einem QR (Quick Response) -Code.

Die Transportvorrichtung ist ein Teil des Transportsystems und ist zum Beispiel eine mobile Vorrichtung wie ein Kran, insbesondere ein Baukran. Alternativ kann die Transportvorrichtung ein Luftfahrzeug, ein Verladefahrzeug, usw. sein. Die Transportvorrichtung kann beispielsweise ein Helikopter bzw. ein Hubschrauber sein. An der Transportvorrichtung ist die Befestigungsvorrichtung befestigt. Diese Befestigungsvorrichtung kann in Form einer hakenförmigen Komponente ausgeführt sein, die hierin auch als Hakenvorrichtung bezeichnet wird. Die Befestigungsvorrichtung ist geeignet, um mit einer zu befestigenden Lastvorrichtung in Eingriff zu kommen, so dass die Lastvorrichtung über die Befestigungsvorrichtung sicher an der Transportvorrichtung befestigt werden kann. Die Befestigungsvorrichtung kann dazu ein Verschlusseinheit oder dergleichen aufweisen, so dass ein selbsttätiges Lösen der Lastvorrichtung von der Befestigungsvorrichtung unterbunden ist. Mit anderen Worten wird durch das Transportsystem gewährleistet, dass die Befestigungsvorrichtung korrekt positioniert wird, um eine Befestigung mit der Lastvorrichtung zu ermöglichen.

Das Transportsystem kann somit ein Identifizierungs- und Positionierungssystem umfassen, das auf optischen Sensoren, Infrarot- oder Radiofrequenzsensoren basiert. Insbesondere bei Verwendung von Kurzwellen, kann sich Infrarot-Identifikation auch in rauen Umgebungen als vorteilhaft erweisen (z.B. bei sog. Brownout oder Whiteout). Das Transportsystem identifiziert zunächst die Last und gibt eine Rückmeldung an das System, um den Haken, das heißt die Befestigungsvorrichtung, zur automatischen Verriegelung zu positionieren. Ein detailliertes Beispiel für eine Befestigungsvorrichtung wird in der Figurenbeschreibung noch genauer erläutert werden.

Das Transportsystem und das damit assoziierte Identifizierungs- und Positionierungssystem reduziert insbesondere die Arbeitsbelastung eines Bedieners der Befestigungsvorrichtung (z.B. eines Piloten oder Kranführers) und ermöglicht eine automatische Beladung der Fracht (z.B. mit einem Hubschrauber oder einem Kran). Der QR-Code kann darüber hinaus Merkmale bzw. Eigenschaften der aufzunehmenden Fracht liefern und z.B. auf den Zielort der Fracht hinweisen.

Die Befestigungsvorrichtung kann über eine seilartige bzw. seilförmige Komponente beweglich an der Transportvorrichtung befestigt sein. In diesem Fall kann die Befestigungsvorrichtung frei hängend bzw. frei schwingend an der Transportvorrichtung befestigt sein. Alternativ kann die Befestigungsvorrichtung über einen beweglichen Ausleger an der Transportvorrichtung befestigt sein, der eine gelenkige Lagerung der Befestigungsvorrichtung in Bezug auf die Transportvorrichtung bereitstellt.

Die Transportvorrichtung kann durch die Steuerungseinheit, die beispielsweise eine Regelung des Transportsystems darstellt bzw. umfasst, gesteuert werden. Beispielsweise erfolgt eine Steuerung einer Antriebseinheit der Transportvorrichtung durch die Steuerungseinheit, um die Transportvorrichtung in Bezug auf eine zu befestigende Lastvorrichtung zu positionieren und/oder auszurichten. Für den Fall, dass die Transportvorrichtung ein Helikopter ist, kann dieser beispielsweise durch die Steuerungseinheit in Bezug auf die noch am Boden befindliche Lastvorrichtung positioniert und ausgerichtet werden, so dass ein anschließendes Befestigen der Lastvorrichtung mittels der Befestigungsvorrichtung am Helikopter ermöglicht wird.

Die Steuerungseinheit steuert die Befestigungsvorrichtung, insbesondere eine Position und/oder Ausrichtung der Befestigungsvorrichtung in Bezug auf die Lastvorrichtung, beispielsweise durch Einfahren oder Ausfahren der seilförmigen Komponente, an welcher die Befestigungsvorrichtung befestigt sein kann. Position und/oder Ausrichtung der Befestigungsvorrichtung in Bezug auf die Lastvorrichtung kann durch aktives Gegensteuern zu einer Schwingung oder Auslenkung der Befestigungsvorrichtung erfolgen. Erfasst die erste Erfassungseinheit zum Beispiel eine ungewollte Schwingung oder Auslenkung der Befestigungsvorrichtung, das heißt eine Abweichung zwischen einer Ist-Position der Befestigungsvorrichtung von einer Soll-Position der Befestigungsvorrichtung, so kann durch die Steuerungseinheit dieser Schwingung oder Auslenkung aktiv entgegengewirkt werden, indem eine Gegenschwingung bzw. Gegenauslenkung der Befestigungsvorrichtung initiiert wird. Dazu wird die Position und/oder die Ausrichtung der Befestigungsvorrichtung kontinuierlich durch die erste Erfassungseinheit überwacht und verfolgt.

Die Soll-Position der Befestigungsvorrichtung stellt dabei zum Beispiel die optimale Position und/oder Ausrichtung der Befestigungsvorrichtung zu einem bestimmten Zeitpunkt, beispielsweise vor dem Befestigen der Lastvorrichtung an der Befestigungsvorrichtung, dar. Zur Befestigung der Lastvorrichtung an der Befestigungsvorrichtung kann es erforderlich sein, dass sich die Befestigungsvorrichtung auf einer Soll-Position befindet. Weicht die Ist-Position, das heißt eine aktuelle Position der Befestigungsvorrichtung, von dieser Sollposition ab, so kann ein Ansteuern der Befestigungsvorrichtung oder sogar der Transportvorrichtung selbst erforderlich sein, um die Befestigungsvorrichtung auf ihre Soll-Position zu bringen, damit ein Befestigen der Lastvorrichtung an der Befestigungsvorrichtung möglich ist. Um die Befestigungsvorrichtung in ihre Soll-Position zu bringen, kann die Steuerungseinheit also auch eine Position und/oder Ausrichtung der Befestigungsvorrichtung in Bezug auf die Transportvorrichtung steuern. Dies kann durch aktives Ansteuern der Befestigungsvorrichtung, beispielsweise über die seilartige Komponente, erfolgen.

Die erste Erfassungseinheit kann zum Beispiel eine Kamera sein, welche eine Ist-Position der Befestigungsvorrichtung überwacht und verfolgt. Die erste Erfassungseinheit ist vorzugsweise am Transportsystem, insbesondere an der Transportvorrichtung, befestigt. Es kann jedoch auch vorgesehen sein, dass die erste Erfassungseinheit an einem vom Transportsystem räumlich getrennten stationären oder mobilen externen System angeordnet ist. Wird durch die erste Erfassungseinheit nun eine Abweichung bzw. ein Abstand zwischen einer Ist-Position der Befestigungsvorrichtung von einer gewünschten Soll-Position der Befestigungsvorrichtung erfasst und bestimmt, so beeinflusst, bzw. steuert die Steuerungseinheit die Bewegung der Befestigungsvorrichtung, um die bestimmte Abweichung zwischen der Ist-Position der Befestigungsvorrichtung von der Soll-Position der Befestigungsvorrichtung zu kompensieren. Diese Kompensation kann durch aktives Positionieren und/oder Ausrichten der Befestigungsvorrichtung erfolgen, so dass diese von ihrer aktuellen Ist-Position in die gewünschte Soll-Position gebracht wird. Dieser Vorgang kann als eine Art Grobpositionierung oder Grobausrichtung der Befestigungsvorrichtung verstanden werden.

Im Anschluss kann die Steuerungseinheit eine räumliche Positionierung der Befestigungsvorrichtung in Bezug auf die Lastvorrichtung vornehmen, was wiederum als eine Art Feinpositionierung oder Feinausrichtung verstanden werden kann. Dazu erfasst die erste Erfassungseinheit ein mit der Lastvorrichtung korrespondierendes Markierungselement. Das Markierungselement ist beispielsweise an der Lastvorrichtung angebracht, insbesondere von außen sichtbar an dieser befestigt. Das Markierungselement kann Informationen über eine bevorzugte Position und/oder Ausrichtung der Befestigungsvorrichtung in Bezug auf die Lastvorrichtung umfassen, welche dadurch gekennzeichnet ist, dass bei dieser bevorzugten Position bzw. Ausrichtung der Befestigungsvorrichtung in Bezug auf die Lastvorrichtung eine Befestigung der Lastvorrichtung an der Befestigungsvorrichtung möglich oder erleichtert ist. Die erste Erfassungseinheit kann auch mehrere mit der Lastvorrichtung korrespondierende Markierungselemente erfassen, welche gleichermaßen zur Positionierung und/oder Ausrichtung der Befestigungsvorrichtung in Bezug auf die Lastvorrichtung verwendet werden. Das Markierungselement kann auch Informationen über die zu befördernde Lastvorrichtung selbst sowie über deren Zielort enthalten. Jedenfalls dient das Markierungselement in erster Linie der Positionierung und/oder der Ausrichtung der Befestigungsvorrichtung in Bezug auf die Lastvorrichtung, wobei die Steuerungseinheit die Informationen vom Markierungselement nutzt, um die Befestigungsvorrichtung in die gewünschte Position und/oder Ausrichtung zu bringen, damit die Lastvorrichtung ordnungsgemäß und sicher an der Befestigungsvorrichtung und damit an der Transportvorrichtung befestigt werden kann.

Der oben beschriebene Bewegungsablauf einer sequenziellen Grobpositionierung/Grobausrichtung und Feinpositionierung/Feinausrichtung der Befestigungsvorrichtung können basierend auf einem Steuerungsalgorithmus in zwei Steuerungsschleifen bzw. Regelkreisen ausgeführt werden. Dies wird weiter unten noch genauer erläutert werden.

Die Steuerungseinheit kann am Transportsystem, insbesondere an oder in der Transportvorrichtung vorgesehen sein. Die Steuerungseinheit kann jedoch auch an einem vom Transportsystem räumlich getrennten stationären oder mobilen externen System angeordnet sein. Die Steuerungseinheit kann eine Recheneinheit bzw. Prozessoreinheit, insbesondere eine CPU (Central Processing Unit) sein, welche mit einer zentralen Steuerung der Transportvorrichtung verbunden ist.

Erfindungsgemäß ist die Steuerungseinheit dazu ausgeführt, basierend auf dem erfassten Markierungselement eine Positionierung und/oder eine Ausrichtung der Transportvorrichtung in Bezug auf die Lastvorrichtung vorzunehmen.

Das bedeutet, dass nicht lediglich die Befestigungsvorrichtung aktiv angesteuert werden kann, um sie in Bezug auf die Lastvorrichtung zu positionieren und/oder auszurichten, sondern auch, dass die Transportvorrichtung selbst aktiv angesteuert werden kann, um diese mitsamt der daran befestigten Befestigungsvorrichtung in Bezug auf die Lastvorrichtung zu positionieren und/oder auszurichten.

Das Positionieren und/oder Ausrichten der Befestigungsvorrichtung in Bezug auf die Lastvorrichtung kann durch aktives Auslenken der Befestigungsvorrichtung oder durch aktives Gegenlenken einer bereits vorhandenen Auslenkung bzw. Schwingung der Befestigungsvorrichtung erfolgen. Das Positionieren und/oder Ausrichten der Transportvorrichtung in Bezug auf die Lastvorrichtung kann durch aktives Ansteuern zur Bewegung der Transportvorrichtung in einer bestimmten Raumrichtung oder durch aktives Ausrichten der Transportvorrichtung im Raum erfolgen.

Gemäß einer Ausführungsform ist die Steuerungseinheit dazu ausgeführt, dem erfassten Markierungselement, beispielsweise einer Erscheinung oder Lage des erfassten Markierungselements, eine mit der Lastvorrichtung korrespondierende Information zu entnehmen und basierend auf der entnommenen Information eine Positionierung der Befestigungsvorrichtung in Bezug auf die Lastvorrichtung vorzunehmen.

Die Information kann beispielsweise eine Information über eine aktuelle Positionierung und/oder Ausrichtung der Befestigungsvorrichtung oder der Transportvorrichtung in Bezug auf die Lastvorrichtung enthalten. Insbesondere ist die Lage und Position des Markierungselements aus Sicht der ersten Erfassungseinheit abhängig von einem "Blickwinkel" auf die Lastvorrichtung, so dass auf eine aktuelle Position und/oder Ausrichtung der Befestigungsvorrichtung relativ zur Lastvorrichtung geschlossen werden kann. Ferner kann die Information eine Art oder einen Typ der zu befestigenden und zu befördernden Lastvorrichtung oder aber einen gewünschten Zielort der Lastvorrichtung angeben. Die Information kann auch einen Steuerungsalgorithmus initiieren, der von der Steuerungseinheit ausgeführt wird, um einen vorbestimmten Bewegungsablauf der Befestigungsvorrichtung bereitzustellen, der darin besteht die Befestigungsvorrichtung in eine für die Befestigung mit der Lastvorrichtung geeignete Position und/oder Ausrichtung zu bringen.

Gemäß einer Ausführungsform umfasst das Transportsystem ferner eine Speichereinheit, in welcher ein vordefinierter Steuerungsalgorithmus gespeichert ist, wobei der vordefinierte Steuerungsalgorithmus einen Bewegungsablauf der Befestigungsvorrichtung definiert und, wobei die Steuerungseinheit dazu ausgeführt ist, basierend auf dem vordefinierten Steuerungsalgorithmus die räumliche Positionierung der Befestigungsvorrichtung in Bezug auf die Lastvorrichtung vorzunehmen.

Erfindungsgemäß erfasst die erste Erfassungseinheit ein oder mehrere Markierungselemente an der Lastvorrichtung und entnehmt diesem/diesen eine entsprechende Information, so dass die Steuerungseinheit basierend auf dieser Information die Befestigungsvorrichtung gemäß einem Bewegungsablauf bewegt.

Der Bewegungsablauf der Befestigungsvorrichtung kann eine räumliche Positionierung und/oder Ausrichtung der Befestigungsvorrichtung in Bezug auf die Lastvorrichtung umfassen. Der Bewegungsablauf kann abhängig von einer Anordnung des Markierungselements bzw. der mehreren Markierungselemente auf der Lastvorrichtung sein.

In einem Beispiel erfolgt die Bewegung gemäß dem Bewegungsablauf derart, dass die Befestigungsvorrichtung ausgehend von einem ersten erfassten Markierungselement über der Lastvorrichtung kontinuierlich in eine Richtung (z. B. nach vorn) bewegt wird, bis ein zweites Markierungselement erreicht wird und sich in der Mitte des erfassten Bildes der ersten Erfassungseinheit befindet. Anschließend kann der Bewegungsablauf eine Bewegung der Befestigungsvorrichtung in eine zweite Richtung (z. B. nach oben) umfassen, um somit die Lastvorrichtung quasi in die Befestigungsvorrichtung einzuhaken, das heißt mit dieser in Eingriff zu bringen.

Der Steuerungsalgorithmus kann auf zwei Regelkreisen und einer Detektionssoftware für die Erfassungseinheit, das heißt für den jeweiligen Sensor, basieren. Der erste Regelkreis kann dabei die an der seilartigen Komponente befestigte Befestigungsvorrichtung unter Kontrolle halten, um Schwingungen zu vermeiden. Der zweite Regelkreis kann zur Erkennung und zur Positionierung der Befestigungsvorrichtung in Bezug auf die aufzunehmende Lastvorrichtung dienen. Ein entsprechender Steuerungsalgorithmus für den zugehörigen Bewegungsablauf kann zum Beispiel wie folgt definiert werden:

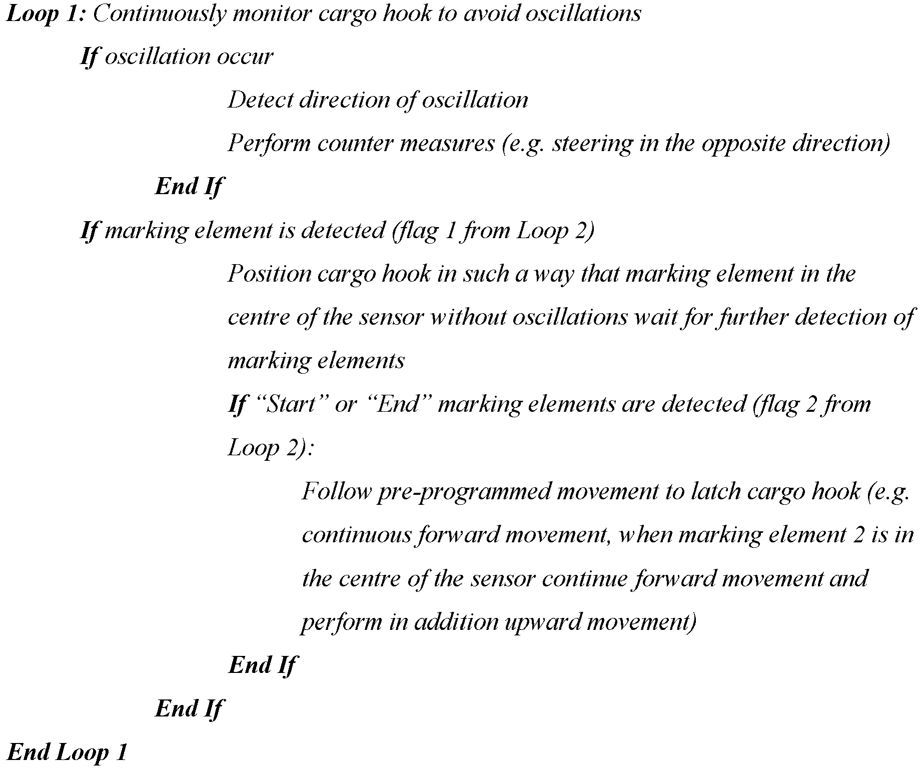

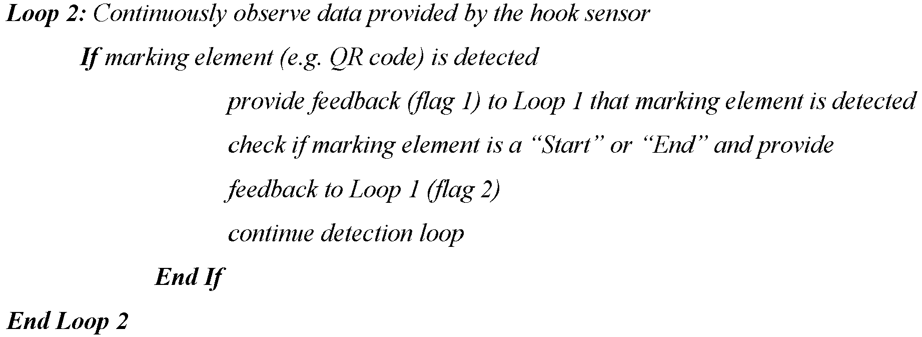

Gemäß einer Ausführungsform ist die Abweichung zwischen der Ist-Position der Befestigungsvorrichtung von der Soll-Position der Befestigungsvorrichtung abhängig von einer Schwingungsbewegung, das heißt Oszillationsbewegung, der Befestigungsvorrichtung in Bezug auf die Lastvorrichtung.

Wenn beispielsweise die Befestigung an einer seilartigen Komponente hängend an der Transportvorrichtung befestigt ist, dann kann es vorkommen, dass die Befestigungsvorrichtung gegenüber der Transportvorrichtung ins Schwingen kommt. Mit anderen Worten schwingt die Befestigungsvorrichtung dann hin und her. Dieses Schwingen kann durch äußere Einflüsse wie Wind oder andere an die Befestigungsvorrichtung anstoßende Objekte hervorgerufen werden oder aber durch die Bewegung der Transportvorrichtung selbst.

Diese Schwingungsbewegung der Befestigungsvorrichtung ist eher nachteilig, da eine Befestigung bzw. das Einhaken der Lastvorrichtung an der Befestigungsvorrichtung hierdurch erschwert wird. Demzufolge definiert eine Schwingungsbewegung in der Regel Ist-Positionen, welche von bevorzugten, das heißt gewünschten Soll-Positionen der Befestigungsvorrichtung abweichen. Es kann somit vorgesehen sein, dass die Befestigungsvorrichtung durch die oben beschriebene Steuerung zunächst in die jeweilige Soll-Position gebracht wird, um eine Befestigung der Lastvorrichtung an der Befestigungsvorrichtung zu ermöglichen. Die Soll-Position, bei welcher die Lastvorrichtung ordnungsgemäß befestigt werden kann, kann sich dabei aus der mit der zu befestigenden Lastvorrichtung korrespondierenden Information ergeben, die aus dem Markierungselement der Lastvorrichtung ausgelesen wird.

Gemäß einer Ausführungsform ist die Befestigungsvorrichtung über eine seilartige Komponente beweglich an der Transportvorrichtung befestigt.

Damit kann die Befestigungsvorrichtung frei hängend oder frei schwingend an der Transportvorrichtung befestigt sein, wobei die Steuerungseinheit die Bewegung und folglich die Position und/oder Orientierung der Befestigungsvorrichtung in Bezug auf die Lastvorrichtung und/oder in Bezug auf die Transportvorrichtung beeinflussen kann.

Die seilartige Komponente kann zum Beispiel durch ein bewegliches Kopplungselement zwischen der Transportvorrichtung und der Befestigungsvorrichtung gebildet sein und eines der nachfolgenden Elemente aufweisen: ein Seil, eine Kette, einen Draht, einen Riemen, einen Strang, ein Band, einen Strick, eine Kordel oder eine Leine.

Gemäß einer Ausführungsform ist die erste Erfassungseinheit an der Transportvorrichtung angebracht.

Die erste Erfassungseinheit kann zum Beispiel schwenkbar an der Transportvorrichtung angebracht sein, um einen möglichst großen Erfassungsbereich abzudecken. Die erste Erfassungseinheit kann einen Erfassungsbereich definieren, welcher zumindest die Befestigungsvorrichtung und/oder die Lastvorrichtung einschließt. Dadurch können Informationen über Position, Lage und Orientierung der Befestigungsvorrichtung sowie Informationen über Position, Lage, Orientierung und Art der Lastvorrichtung gewonnen werden und anschließend der Steuerungseinheit zugeführt werden, um damit die Bewegung der Transportvorrichtung und/oder der Befestigungsvorrichtung zu steuern.

Gemäß einer Ausführungsform weist das Transportsystem eine zweite Erfassungseinheit auf, welche an der Befestigungsvorrichtung angebracht ist.

Die Befestigungsvorrichtung kann, wenn sie frei hängend an der Transportvorrichtung befestigt ist, eine obere, der Transportvorrichtung zugewandte Seite sowie eine untere, der Lastvorrichtung zugewandte Seite aufweisen. Die zweite Erfassungseinheit kann an der unteren, der Lastvorrichtung zugewandten Seite angeordnet sein. Sollte beispielsweise die Lastvorrichtung aus Sicht der ersten Erfassungseinheit durch die Befestigungsvorrichtung verdeckt sein, so kann die Lastvorrichtung dennoch durch die zweite Erfassungseinheit erfasst werden. Die Anordnung von zwei räumlich getrennten Erfassungseinheiten kann also den Gesamterfassungsbereich vergrößern und die Erfassung der am Boden befindlichen Lastvorrichtung sicherstellen, so dass deren Position, Ausrichtung und Art bestimmt oder etwaige darauf befindliche Markierungselemente ausgelesen werden können.

Gemäß einer Ausführungsform ist das Markierungselement ausgewählt ist aus der Gruppe umfassend: eine dreidimensionale Geometrie, ein zweidimensionales Muster, einen zweidimensionalen Code, einen Farbcode, einen QR-Code oder einen Strichcode.

Diese Arten von Markierungselement können Informationen enthalten, die zur Befestigung der Lastvorrichtung erforderlich sind. Beispielsweise können sie Informationen über einen Bewegungsablauf enthalten, der zur ordnungsgemäßen Befestigung der Lastvorrichtung an der Befestigungsvorrichtung ausgeführt werden sollte. Sofern mehrere Markierungselemente auf der Lastvorrichtung vorgesehen sind, kann dies beliebige Kombinationen der oben genannten Arten von Markierungselementen umfassen.

Gemäß einer Ausführungsform verwendet die erste Erfassungseinheit optisches Erfassungsverfahren, ein elektro-optisches Erfassungsverfahren, ein Infraroterfassungsverfahren oder ein Funksignalerfassungsverfahren. Alternativ oder zusätzlich verwendet die zweite Erfassungseinheit ein optisches Erfassungsverfahren, ein elektro-optisches Erfassungsverfahren, ein Infraroterfassungsverfahren oder ein Funksignalerfassungsverfahren.

Zum Beispiel kann die erste und/oder die zweite Erfassungseinheit ein Infrarot-Kurzwellen-Identifikationsverfahren ausführen, was die Erfassung auch bei widrigen Umgebungsbedingungen und Witterungsbedingungen (zum Beispiel bei sog. Whiteout oder Brownout) unter der Transportvorrichtung verbessert.

Entsprechend den genannten Erfassungsverfahren kann die erste Erfassungseinheit und/oder die zweite Erfassungseinheit einen elektro-optischen Sensor, einen Infrarotsensor oder einen Radiofrequenzsensor aufweisen.

Gemäß einem Aspekt der Erfindung ist ein Luftfahrzeug mit dem zuvor und nachfolgend beschriebenen Transportsystem angegeben.

Dabei kann das Luftfahrzeug die damit verbundene Befestigungsvorrichtung aufweisen, so dass mittels der Befestigungsvorrichtung ein Lufttransport der Lastvorrichtung ermöglicht wird. Das Luftfahrzeug kann ein schwebeflugfähiges bemanntes oder unbemanntes Luftfahrzeug sein. Beispielsweise ist das Luftfahrzeug ein senkrechtstartfähiges Luftfahrzeug wie ein Hubschrauber bzw. ein Helikopter oder eine Drohne.

Es sei angemerkt, dass das erfindungsgemäße Transportsystem auch allgemein als ein mobiles Transportsystem verwendet werden kann. Beispielsweise kann das Transportsystem ein Kransystem, wie beispielsweise ein Baukran oder ein Verladekran, oder aber ein Bodenfahrzeug sein.

Gemäß einem weiteren Aspekt der Erfindung ist ein Verfahren zum Steuern eines Transportsystems angegeben. In einem Schritt des Verfahrens erfolgt ein Bereitstellen einer Transportvorrichtung und in einem weiteren Schritt erfolgt ein bewegliches Befestigen einer Befestigungsvorrichtung an der Transportvorrichtung. In einem weiteren Schritt erfolgt ein Bestimmen einer Abweichung zwischen einer Ist-Position der Befestigungsvorrichtung von einer Soll-Position der Befestigungsvorrichtung mittels einer ersten Erfassungseinheit. In einem weiteren Schritt erfolgt ein Beeinflussen einer Bewegung der Befestigungsvorrichtung, um die bestimmte Abweichung zwischen der Ist-Position der Befestigungsvorrichtung von der Soll-Position der Befestigungsvorrichtung zu kompensieren, das heißt auszugleichen. In einem weiteren Schritt erfolgt ein Erfassen eines mit der Lastvorrichtung korrespondierenden Markierungselements mittels der ersten Erfassungseinheit. In einem weiteren Schritt erfolgt ein räumliches Positionieren der Befestigungsvorrichtung in Bezug auf die Lastvorrichtung basierend auf dem erfassten Markierungselement. Das Markierungselement enthält eine Information über einen Bewegungsablauf zur Befestigung der Lastvorrichtung an der Befestigungsvorrichtung und eine Steuerungseinheit ist dazu ausgeführt, basierend auf dieser Information die Befestigungsvorrichtung gemäß dem Bewegungsablauf zu bewegen.

Die genannten Verfahrensschritte können insbesondere zeitlich in der genannten Reihenfolge durchgeführt werden. Mit dem erfindungsgemäßen Verfahren kann eine automatische Identifikation und ein anschließendes automatisches Aufgreifen der Last mittels des Transportsystems erfolgen.

### Kurze Beschreibung der Figuren

- Fig. 1: zeigt ein Transportsystem und eine nicht befestigte Lastvorrichtung gemäß einem Ausführungsbeispiel.
- Fig. 2: zeigt ein Transportsystem und eine daran befestigte Lastvorrichtung gemäß einem Ausführungsbeispiel.
- Fig. 3: zeigt ein Transportsystem mit einer schwingenden Befestigungsvorrichtung gemäß einem Ausführungsbeispiel.
- Fig. 4: zeigt ein Transportsystem und eine daran befestigte Lastvorrichtung gemäß einem weiteren Ausführungsbeispiel.
- Fig. 5: zeigt eine Befestigungsvorrichtung gemäß einem Ausführungsbeispiel.
- Fig. 6: zeigt ein Flussdiagramm für ein Verfahren zum Steuern eines Transportsystems gemäß einem Ausführungsbeispiel.

### Detaillierte Beschreibung beispielhafter Ausführungsformen

Die Darstellungen in den Figuren sind schematisch und nicht maßstäblich. Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

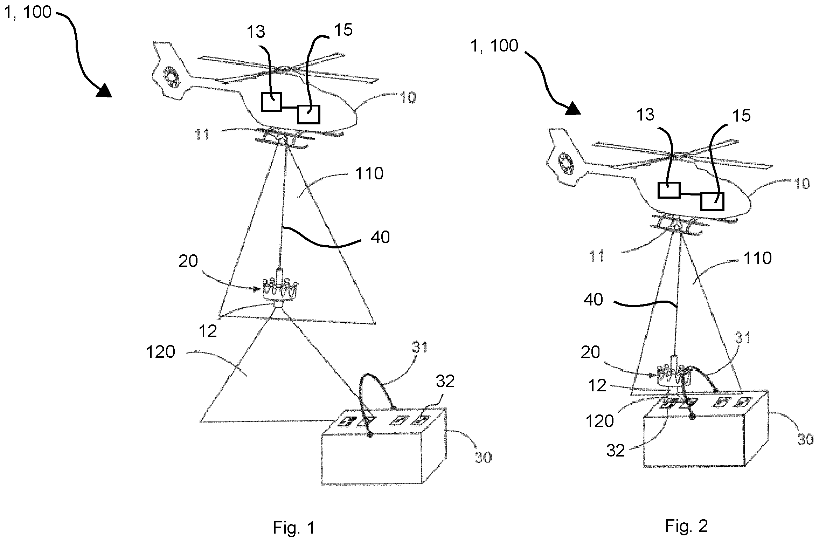

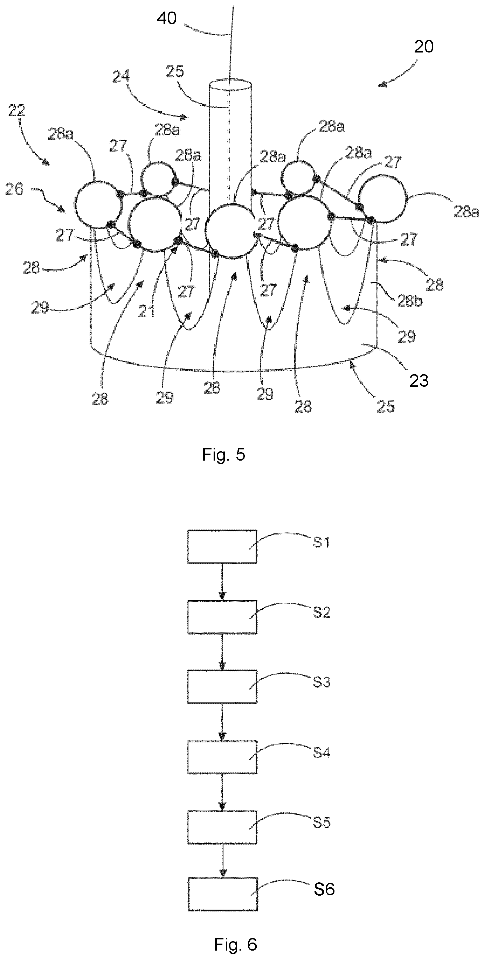

Fig. 1 zeigt ein Transportsystem 1 zum Befördern einer Lastvorrichtung 30, beispielsweise eines Standardfrachtcontainers, wobei das Transportsystem 1 zeitlich vor dem Befestigen der Lastvorrichtung 30 dargestellt ist. Das Transportsystem 1 umfasst eine Transportvorrichtung 10, welche in der in Fig. 1 gezeigten Konfiguration ein Hubschrauber 100 ist. Der Hubschrauber 100 befindet sich in einem Flugzustand. Der Hubschrauber 100 weist eine Steuerungseinheit 13 und eine Speichereinheit 15 auf. Eine Befestigungsvorrichtung 20 ist über eine seilartige Komponente 40 beweglich an dem Hubschrauber 100 befestigt. Mittels der Befestigungsvorrichtung 20 kann die Lastvorrichtung 30 an der Transportvorrichtung 10 befestigt werden, wie dies in Fig. 2 dargestellt ist. Ein Beispiel für die Befestigungsvorrichtung 20 wird mit Bezug zu Fig. 5 weiter unten beschrieben.

Das Transportsystem 1 umfasst ferner eine erste Erfassungseinheit 11, welche in der in Fig. 1 gezeigten Konfiguration direkt an dem Hubschrauber 100, insbesondere an einer Unterseite des Hubschraubers 100, angeordnet ist. Die erste Erfassungseinheit 11 kann eine optische Kamera, eine Infrarot-Kamera, ein Funkwellenempfänger, etc. sein. Die erste Erfassungseinheit 11 kann einen ersten Erfassungsbereich 110 abdecken, das heißt einen Bereich, in dem die erste Erfassungseinheit 11 Bilder, Daten und/der Informationen erfassen kann.

Das Transportsystem 1 umfasst ferner eine zweite Erfassungseinheit 12, welche in der in Fig. 1 gezeigten Konfiguration direkt an der Befestigungsvorrichtung 20, insbesondere an einer Unterseite der Befestigungsvorrichtung 100, angeordnet ist. Die zweite Erfassungseinheit 12 kann ebenfalls eine optische Kamera, eine Infrarot-Kamera, ein Funkwellenempfänger, etc. sein. Die zweite Erfassungseinheit 12 kann einen zweiten Erfassungsbereich 120 abdecken, das heißt einen Bereich, in dem die zweite Erfassungseinheit 12 Bilder, Daten und/der Informationen erfassen kann. Es sei angemerkt, dass die zweite Erfassungseinheit 12 nicht notwendigerweise vorgesehen sein muss. Insbesondere ist es möglich, dass lediglich die erste Erfassungseinheit 11 vorgesehen ist, zum Beispiel dann, wenn die erste Erfassungseinheit 11 die benötigten Bilder, Daten und/der Informationen, wie z.B. den QR Code auf der Lastvorrichtung 30, erfassen kann und diese nicht durch die Lastvorrichtung 30 oder andere Objekte verdeckt werden.

Die erste Erfassungseinheit 11 erfasst zumindest die Befestigungsvorrichtung 20, um deren aktuelle Ist-Position und/oder Ist-Ausrichtung zu erfassen, so dass die Ist-Position und/oder Ist-Ausrichtung der Befestigungsvorrichtung 20 von der Steuerungseinheit 13 des Hubschraubers 100 bestimmt und anschließend beeinflusst werden kann.

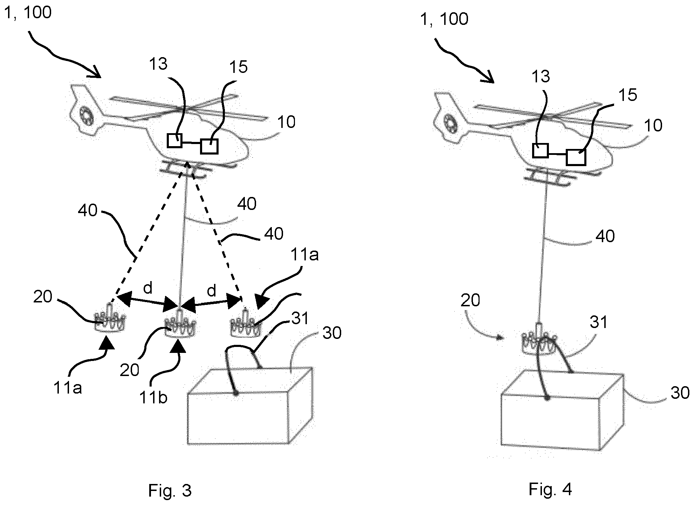

Wie in Fig. 3 zu erkennen, kann die Befestigungsvorrichtung 20 durch ihre bewegliche Befestigung über die seilartige Komponente 40 am Hubschrauber 100 in Schwingung geraten bzw. aus einer Soll-Position 11b bzw. einer bevorzugten Position 11b ausgelenkt werden. Die erste Erfassungseinheit 11 kann in diesem Fall eine Abweichung d zwischen einer Ist-Position 11a, das heißt einer aktuellen ausgelenkten Position der Befestigungsvorrichtung 20 von der Soll-Position 11b der Befestigungsvorrichtung 20 bestimmen. Die Steuerungseinheit 13 kann nun eine Bewegung der Befestigungsvorrichtung 20 durch Ändern der Position und/oder Orientierung der Befestigungsvorrichtung 20 im Raum beeinflussen, um die bestimmte Abweichung d zwischen der Ist-Position 11a der Befestigungsvorrichtung 20 von der Soll-Position 11b der Befestigungsvorrichtung 20 zu kompensieren, das heißt auszugleichen. Mit anderen Worten wird die Befestigungsvorrichtung 20 mittels Ansteuerns durch die Steuerungseinheit 13 aktiv in ihre Soll-Position 11b gebracht, um die Befestigungsvorrichtung 20 für den Eingriff mit der Lastvorrichtung 30, insbesondere einer Lastbefestigungskomponente 31 der Lastvorrichtung 30, vorzubereiten.

Die Befestigungsvorrichtung 20 kann dabei in einem ersten Steuerungsschritt durch Bewegen und/oder Rotieren des Hubschraubers 100 und/oder durch Bewegen bzw. Gegenschwingen der seilartigen Komponente 40 und der daran befestigten Befestigungsvorrichtung 20 in ihre Soll-Position 11b gebracht werden. Sobald sich die Befestigungsvorrichtung 20 in ihrer Soll-Position 11b befindet, kann in einem zweiten Steuerungsschritt basierend auf einem erfassten Markierungselement 32, welches an der Lastvorrichtung 30 angebracht ist (vgl. Figuren 1 und 2), ein Anflug des Hubschraubers 100 relativ zur Lastvorrichtung 30 derart erfolgen, dass diese mit der Befestigungsvorrichtung 20 in Eingriff gebracht wird. Die erste Erfassungseinheit 11 kann dazu ein oder mehrere mit der Lastvorrichtung 30 korrespondierende Markierungselemente 32 erfassen, welche Informationen oder Vorgaben über einen Bewegungsablauf für den Anflug zur Befestigung der Lastvorrichtung 30 an der Befestigungsvorrichtung 20 enthalten können. Die Steuerungseinheit 13 nimmt basierend auf dem erfassten Markierungselement 32 eine räumliche Positionierung der Befestigungsvorrichtung 20 relativ zur Lastvorrichtung 30 vor, bis sich die Befestigungsvorrichtung 20 in einer für die Befestigung der Lastvorrichtung 30 geeigneten Position und/oder Ausrichtung befindet. Anschließend, das heißt nach Befestigung, kann die Lastvorrichtung 30 mittels des Hubschraubers 100 durch die Luft transportiert werden.

Die Figuren 2 und 4 zeigen jeweils den Zustand, bei dem die Lastvorrichtung 30 mittels der Lastbefestigungskomponente 31 an der Befestigungsvorrichtung 20 für den Transport befestigt ist.

Das Erfassen der Markierungselemente 32 auf der zu befestigenden Lastvorrichtung 30 kann mittels der zweiten Erfassungseinheit 12 erfolgen, welche, wie in den Figuren 1 und 2 dargestellt, an der Unterseite der Befestigungsvorrichtung 20 angebracht ist. Dabei können sich die Markierungselemente 32 zumindest teilweise innerhalb des zu der zweiten Erfassungseinheit 12 gehörenden Abdeckungsbereichs 120 befinden. Der in Fig. 2 dargestellte Vorgang des Befestigens der Lastvorrichtung 30 an der Befestigungsvorrichtung 20 kann eine Ansteuerung bzw. Anfliegen des Hubschraubers 100 und der damit verbundenen Befestigungsvorrichtung 20 auf die Lastvorrichtung umfassen, wobei die Ansteuerung auf einem durch einen Steuerungsalgorithmus definierten Bewegungsablauf beruht. Hierfür kann eine Vielzahl von Steuerungsalgorithmen in der Speichereinheit 15 gespeichert bzw. hinterlegt sein. Unter Verwendung eines der Steuerungsalgorithmen kann die Steuerungseinheit 13 die räumliche Positionierung und/oder Ausrichtung der Befestigungsvorrichtung 20 in Bezug auf die Lastvorrichtung 30 vornehmen.

Die erfindungsgemäße Transportvorrichtung 1 basiert auf einem ersten Regelkreis zur Stabilisierung der Lastvorrichtung 30 und einem zweiten Regelkreis, der sicherstellt, dass sich die Befestigungsvorrichtung 20 der Lastvorrichtung 30 nähert. Damit kann beispielsweise ein Pilot des Hubschraubers 100 beim Verriegeln der Lastvorrichtung 30 an der Befestigungsvorrichtung 20 unterstützt werden. Ein solches Stabilisierungssystem kann auf optischen, Infrarot- oder Radiofrequenzsensoren basieren, um die Befestigungsvorrichtung 20 und die Lastvorrichtung 30 schwingungsfrei unter dem Hubschrauber 100 zu halten. Das Stabilisierungssystem kann auch als Detektionssystem für die Lastvorrichtung 30 dienen. Für beliebige geometrische Randbedingungen kann optional ein zusätzlicher Sensor 12, das heißt die zweite Erfassungseinheit 12, implementiert werden, um die Erfassung der Lastvorrichtung 30 ohne Abschattungseffekte durch die Befestigungsvorrichtung 20 zu gewährleisten. Der Regelkreis des Transportsystems 1 gibt bei der Erfassung der Lastvorrichtung 30 eine Rückmeldung an ein Positionierungssystem der Befestigungsvorrichtung 20 (z.B. ein automatisches Flugsteuerungssystem des Hubschraubers 100), so dass eine vordefinierte Annäherung vollzogen werden kann, um die Lastvorrichtung 30 zu verriegeln.

Fig. 5 zeigt eine perspektivische Ansicht einer Befestigungsvorrichtung 20 zum lösbaren Befestigen einer nicht dargestellten Lastvorrichtung an einer teilweise dargestellten seilartigen Komponente 40. Die Befestigungsvorrichtung 20 umfasst eine Tragstruktur 23 mit einer Befestigungseinheit 24 und einer Verschlusseinheit 26, wobei die Befestigungseinheit 24 mit der seilartigen Komponente 40 verbunden ist. Die Verschlusseinheit 26 ist zum lösbaren Befestigen der Lastvorrichtung ausgebildet ist. Die Verschlusseinheit 26 weist insbesondere eine Mehrzahl von Auskragungen 28 auf, welche in vorgegebenen, vorzugsweise gleichen Abständen entlang eines Umfangs 22 der Tragstruktur 23 angeordnet sind. Jede Auskragung 28 der Mehrzahl von Auskragungen 28 weist ein Verschlusselement 27 auf, welches zwischen dem in Fig. 5 dargestellten geschlossenen Zustand und einem geöffneten Zustand bewegbar ist.

Die Auskragungen 28 können in die Tragstruktur 23 integriert sein oder an dieser befestigt sein. Dabei können die Auskragungen 28 aus einer kreisförmigen Grundplatte bzw. einem kreisförmigen Grundgestell der Tragstruktur 23 hervorstehen und somit als Ausläufer oder Ausleger angesehen werden, welche sich entlang des Umfangs der Tragstruktur 23 in Form einer Sägezahnstruktur oder einer Wellenstruktur erstrecken, so dass sich der Eindruck einer kronenähnlichen Hakenvorrichtung 20 ergibt. In der Fig. 5 ist eine Konfiguration der Befestigungsvorrichtung 20 mit genau acht Auskragungen 18 gezeigt, wobei eine Auskragung 28 durch die Befestigungseinheit 24 verdeckt ist.

Jeweils zwei benachbarte Auskragungen 28 bilden gemeinsam eine Aussparung 29 zur Aufnahme der nicht dargestellten Lastvorrichtung, insbesondere einer Lastbefestigungskomponente der Lastvorrichtung. Die Aussparungen 29 sind jeweils durch zwei benachbarte Auskragungen 28 sowie durch ein sich im geschlossenen Zustand befindendes Verschlusselement 27 definiert bzw. eingegrenzt. Auf diese Weise bildet die Aussparung 29 im geschlossenen Zustand des Verschlusselements 27 eine Öffnung, durch welche sich eine Lastbefestigungskomponente der Lastvorrichtung erstrecken kann. In der Fig. 5 ist eine Konfiguration der Befestigungsvorrichtung 20 mit genau acht Aussparungen 29 gezeigt, die jeweils zwischen zwei benachbarten Auskragungen 28 entlang des Umfangs 22 angeordnet sind.

Die Verschlusselemente 27 sind längliche, insbesondere stabförmige oder stangenförmige Elemente, die jeweils an einem Kopplungspunkt 21 an einer zugehörigen Auskragung 28 befestigt und um diesen Kopplungspunkt 21 schwenkbar bzw. drehbar sind. Wie in Fig. 5 für einen Kopplungspunkt 21 dargestellt, befindet sich dieser an einem freien Ende 28a der Auskragung 28. Analog dazu können Kopplungspunkte 21 an sämtlichen verbleibenden Auskragungen 28 vorgesehen sein.

Die Auskragungen 28 weisen also jeweils ein freies Ende 28a auf, an welchem das Verschlusselement 27 angebracht ist, sowie einen Verbindungsabschnitt 28b (in Fig. 5 der Übersichtlichkeit halber nur einmal dargestellt), welcher das freie Ende 28a der jeweiligen Auskragung 28 mit der Tragstruktur 23 verbindet. Ebenfalls in Fig. 5 zu erkennen ist, dass das freie Ende 28a der Auskragung 28 gegenüber dem Verbindungsabschnitt 28b der Auskragung 28 verbreitert ist. Der verbreiterte Bereich des freien Endes 28a der Auskragung 28 kann, wie in Fig. 5 dargestellt, im Wesentlichen eine Kugelform aufweisen.

Die Verschlusselemente 27 stehen in dem in Fig. 5 gezeigten geschlossenen Zustand mit jeweils einer benachbarten Auskragung 28, insbesondere einem freien Ende 28a der benachbarten Auskragung 28, in Kontakt. Beim Öffnen der Verschlusselemente 27 werden diese von der benachbarten Auskragung 28 weggedreht, so dass zumindest eines oder einige der Verschlusselemente 27 in einem geöffneten Zustand von der benachbarten Auskragung 28 räumlich getrennt sind.

In der in Fig. 5 dargestellten Konfiguration weist die Verschlusseinheit 26 im Wesentlichen eine Zylinderform auf. Dabei sind die Auskragungen 28 in etwa parallel zu einer zentralen Achse 25 der Tragstruktur 23 ausgerichtet, was bedeutet, dass sämtliche Auskragungen 28 senkrecht aus einer in Fig. 5 verdeckten Grundplatte bzw. einem Grundgestell der Tragstruktur 23 herausragen. Die zentrale Achse 25 der Tragstruktur 23 bildet eine Mittelachse 25 des Umfangs 22 der Tragstruktur 23.

Die Befestigungseinheit 24 ist zylinderförmig ausgebildet und dient zur Befestigung der Tragstruktur 23 und damit der gesamten Befestigungsvorrichtung 20 an der in Fig. 5 nur teilweise dargestellten seilartigen Komponente 40. Die seilartige Komponente 40 kann ein seilförmiges Element umfassen, mit welchem die Befestigungsvorrichtung 20 frei hängend oder frei schwingend an der nicht dargestellten Transportvorrichtung, beispielsweise einem Luftfahrzeug, befestigt ist.

Fig. 6 zeigt ein Flussdiagramm für ein Verfahren zum Steuern eines Transportsystems 1. In einem Schritt S1 erfolgt ein Bereitstellen einer Transportvorrichtung 10 und in einem weiteren Schritt S2 erfolgt ein bewegliches Befestigen einer Befestigungsvorrichtung 20 an der Transportvorrichtung 20. In einem weiteren Schritt S3 erfolgt ein Bestimmen einer Abweichung d zwischen einer Ist-Position 11a der Befestigungsvorrichtung 20 von einer Soll-Position 11b der Befestigungsvorrichtung 20 mittels einer ersten Erfassungseinheit 11. In einem weiteren Schritt S4 erfolgt ein Beeinflussen einer Bewegung der Befestigungsvorrichtung 20, um die bestimmte Abweichung d zwischen der Ist-Position 11a der Befestigungsvorrichtung 20 von der Soll-Position 11b der Befestigungsvorrichtung 20 zu kompensieren. In einem Schritt S5 erfolgt ein Erfassen eines mit der Lastvorrichtung 30 korrespondierenden Markierungselements 32 mittels der ersten Erfassungseinheit 11. In einem weiteren Schritt S6 erfolgt ein räumliches Positionieren der Befestigungsvorrichtung 20 in Bezug auf die Lastvorrichtung 30 basierend auf dem erfassten Markierungselement 32.

## Patentansprüche

1. Transportsystem (1) zum Befördern einer Lastvorrichtung (30), aufweisend:
eine Transportvorrichtung (10);
eine Befestigungsvorrichtung (20), welche beweglich an der Transportvorrichtung (10) befestigt ist und welche dazu ausgeführt ist, die Lastvorrichtung (30) an der Transportvorrichtung (10) zu befestigen;
eine erste Erfassungseinheit (11), welche dazu ausgeführt ist, eine Abweichung (d) zwischen einer Ist-Position (11a) der Befestigungsvorrichtung (20) von einer Soll-Position (11b) der Befestigungsvorrichtung (20) zu bestimmen;
eine Steuerungseinheit (13), welche dazu ausgeführt ist, eine Bewegung der Befestigungsvorrichtung (20) zu beeinflussen, um die bestimmte Abweichung (d) zwischen der Ist-Position (11a) der Befestigungsvorrichtung (20) von der Soll-Position (11b) der Befestigungsvorrichtung (20) zu kompensieren;
wobei die erste Erfassungseinheit (11) dazu ausgeführt ist, ein mit der Lastvorrichtung (30) korrespondierendes Markierungselement (32) zu erfassen;
wobei die Steuerungseinheit (13) dazu ausgeführt ist, basierend auf dem erfassten Markierungselement (32) eine räumliche Positionierung der Befestigungsvorrichtung (20) in Bezug auf die Lastvorrichtung (30) vorzunehmen;
**dadurch gekennzeichnet, dass** das Markierungselement (32) eine Information über einen Bewegungsablauf zur Befestigung der Lastvorrichtung (30) an der Befestigungsvorrichtung (20) enthält;
wobei die Steuerungseinheit (13) dazu ausgeführt ist, basierend auf dieser Information die Befestigungsvorrichtung (20) gemäß dem Bewegungsablauf zu bewegen.

2. Transportsystem (1) nach Anspruch 1,
wobei die Steuerungseinheit (13) dazu ausgeführt ist, basierend auf dem erfassten Markierungselement (32) eine Positionierung der Transportvorrichtung (10) in Bezug auf die Lastvorrichtung (30) vorzunehmen.

3. Transportsystem (1) nach einem der vorhergehenden Ansprüche,
wobei die Steuerungseinheit (13) dazu ausgeführt ist, dem erfassten Markierungselement (32) eine mit der Lastvorrichtung (30) korrespondierende Information zu entnehmen und basierend auf der entnommenen Information eine Positionierung der Befestigungsvorrichtung (20) in Bezug auf die Lastvorrichtung (30) vorzunehmen.

4. Transportsystem (1) nach einem der vorhergehenden Ansprüche, aufweisend:
eine Speichereinheit (15), in welcher ein vordefinierter Steuerungsalgorithmus gespeichert ist;
wobei der vordefinierte Steuerungsalgorithmus einen Bewegungsablauf der Befestigungsvorrichtung (20) definiert;
wobei die Steuerungseinheit (13) dazu ausgeführt ist, basierend auf dem vordefinierten Steuerungsalgorithmus die räumliche Positionierung der Befestigungsvorrichtung (20) in Bezug auf die Lastvorrichtung (30) vorzunehmen.

5. Transportsystem (1) nach einem der vorhergehenden Ansprüche,
wobei die Abweichung (d) zwischen der Ist-Position (11a) der Befestigungsvorrichtung (20) von der Soll-Position (11b) der Befestigungsvorrichtung (20) abhängig ist von einer Schwingungsbewegung der Befestigungsvorrichtung (20) in Bezug auf die Lastvorrichtung (30).

6. Transportsystem (1) nach einem der vorhergehenden Ansprüche,
wobei die Befestigungsvorrichtung (20) über eine seilartige Komponente (40) beweglich an der Transportvorrichtung (10) befestigt ist.

7. Transportsystem (1) nach einem der vorhergehenden Ansprüche,
wobei die erste Erfassungseinheit (11) an der Transportvorrichtung (10) angebracht ist.

8. Transportsystem (1) nach einem der vorhergehenden Ansprüche, aufweisend:
eine zweite Erfassungseinheit (12), welche an der Befestigungsvorrichtung (20) angebracht ist.

9. Transportsystem (1) nach einem der vorhergehenden Ansprüche,
wobei das Markierungselement (32) ausgewählt ist aus der Gruppe umfassend: eine dreidimensionale Geometrie, ein zweidimensionales Muster, einen zweidimensionalen Code, einen Farbcode, einen QR-Code oder einen Strichcode.

10. Transportsystem (1) nach einem der vorhergehenden Ansprüche,
wobei die erste Erfassungseinheit (11) ein optisches Erfassungsverfahren, ein elektro-optisches Erfassungsverfahren, ein Infraroterfassungsverfahren oder ein Funksignalerfassungsverfahren verwendet; und/oder
wobei die zweite Erfassungseinheit (12) ein optisches Erfassungsverfahren, ein elektro-optisches Erfassungsverfahren, ein Infraroterfassungsverfahren oder ein Funksignalerfassungsverfahren verwendet.

11. Luftfahrzeug (100) mit einem Transportsystem (1) nach einem der vorhergehenden Ansprüche.

12. Verfahren zum Steuern eines Transportsystems (1), aufweisend:
Bereitstellen einer Transportvorrichtung (10, S1);
Bewegliches Befestigen einer Befestigungsvorrichtung (20) an der Transportvorrichtung (20, S2);
Bestimmen einer Abweichung (d) zwischen einer Ist-Position (11a) der Befestigungsvorrichtung (20) von einer Soll-Position (11b) der Befestigungsvorrichtung (20) mittels einer ersten Erfassungseinheit (11, S3);
Beeinflussen einer Bewegung der Befestigungsvorrichtung (20), um die bestimmte Abweichung (d) zwischen der Ist-Position (11a) der Befestigungsvorrichtung (20) von der Soll-Position (11b) der Befestigungsvorrichtung (20) zu kompensieren (S4);
Erfassen eines mit der Lastvorrichtung (30) korrespondierenden Markierungselements (32) mittels der ersten Erfassungseinheit (11, S5);
Räumliches Positionieren der Befestigungsvorrichtung (20) in Bezug auf die Lastvorrichtung (30) basierend auf dem erfassten Markierungselement (32, S6);
**dadurch gekennzeichnet, dass** das Markierungselement (32) eine Information über einen Bewegungsablauf zur Befestigung der Lastvorrichtung (30) an der Befestigungsvorrichtung (20) enthält;
wobei eine Steuerungseinheit (13) dazu ausgeführt ist, basierend auf dieser Information die Befestigungsvorrichtung (20) gemäß dem Bewegungsablauf zu bewegen.

## Claims

1. Transport system (1) for conveying a load device (30), comprising:
a transport device (10);
an attachment device (20), which is attached to the transport device (10) in a movable manner and which is designed to attach the load device (30) to the transport device (10);
a first capture unit (11), which is designed to determine a deviation (d) between an actual position (11a) of the attachment device (20) and a desired position (11b) of the attachment device (20);
a control unit (13), which is designed to influence a motion of the attachment device (20) in order to compensate for the determined deviation (d) between the actual position (11a) of the attachment device (20) and the desired position (11b) of the attachment device (20); the first capture unit (11) being designed to capture a marking element (32) corresponding to the load device (30) ;
the control unit (13) being designed to take the captured marking element (32) as a basis for spatially positioning the attachment device (20) in relation to the load device (30) ;
**characterized in that**
the marking element (32) contains information about a motion sequence for attaching the load device (30) to the attachment device (20);
the control unit (13) being designed to take this information as a basis for moving the attachment device (20) according to the motion sequence.

2. Transport system (1) according to Claim 1,
wherein the control unit (13) is designed to take the captured marking element (32) as a basis for positioning the transport device (10) in relation to the load device (30) .

3. Transport system (1) according to either of the preceding claims,
wherein the control unit (13) is designed to infer information corresponding to the load device (30) from the captured marking element (32) and to take the inferred information as a basis for positioning the attachment device (20) in relation to the load device (30) .

4. Transport system (1) according to one of the preceding claims, comprising:
a storage unit (15) that stores a predefined control algorithm;
the predefined control algorithm defining a motion sequence for the attachment device (20);
the control unit (13) being designed to take the predefined control algorithm as a basis for spatially positioning the attachment device (20) in relation to the load device (30).

5. Transport system (1) according to one of the preceding claims,
wherein the deviation (d) between the actual position (11a) of the attachment device (20) and the desired position (11b) of the attachment device (20) is dependent on an oscillating motion of the attachment device (20) in relation to the load device (30).

6. Transport system (1) according to one of the preceding claims,
wherein the attachment device (20) is attached to the transport device (10) in a movable manner via a rope-like component (40).

7. Transport system (1) according to one of the preceding claims,
wherein the first capture unit (11) is mounted on the transport device (10).

8. Transport system (1) according to one of the preceding claims, comprising:
a second capture unit (12), which is mounted on the attachment device (20).

9. Transport system (1) according to one of the preceding claims,
wherein the marking element (32) is selected from the group comprising: a three-dimensional geometry, a two-dimensional pattern, a two-dimensional code, a colour code, a QR code or a barcode.

10. Transport system (1) according to one of the preceding claims,
wherein the first capture unit (11) uses an optical capture method, an electro-optical capture method, an infrared capture method or a radio signal capture method; and/or
wherein the second capture unit (12) uses an optical capture method, an electro-optical capture method, an infrared capture method or a radio signal capture method.

11. Aircraft (100) having a transport system (1) according to one of the preceding claims.

12. Method for controlling a transport system (1), comprising:
providing a transport device (10, S1);
attaching an attachment device (20) to the transport device in a movable manner (20, S2);
determining a deviation (d) between an actual position (11a) of the attachment device (20) and a desired position (11b) of the attachment device (20) by means of a first capture unit (11, S3);
influencing a motion of the attachment device (20) in order to compensate for the determined deviation (d) between the actual position (11a) of the attachment device (20) and the desired position (11b) of the attachment device (20) (S4);
capturing a marking element (32) corresponding to the load device (30) by means of the first capture unit (11, S5) ;
spatially positioning the attachment device (20) in relation to the load device (30) on the basis of the captured marking element (32, S6);
**characterized in that**
the marking element (32) contains information about a motion sequence for attaching the load device (30) to the attachment device (20);
a control unit (13) being designed to take this information as a basis for moving the attachment device (20) according to the motion sequence.

## Revendications

1. Système de transport (1) destiné à convoyer un dispositif de charge (30), ledit système de transport comportant :
un dispositif de transport (10) ;
un dispositif de fixation (20), lequel est fixé de manière mobile sur le dispositif de transport (10) et lequel est conçu pour fixer le dispositif de charge (30) sur le dispositif de transport (10) ;
une première unité de détection (11), laquelle est conçue pour déterminer un écart (d) d'une position réelle (11a) du dispositif de fixation (20) par rapport à une position théorique (11b) du dispositif de fixation (20) ;
une unité de commande (13), laquelle est conçue pour influer sur un déplacement du dispositif de fixation (20) pour compenser l'écart (d) déterminé de la position réelle (11a) du dispositif de fixation (20) par rapport à la position théorique (11b) du dispositif de fixation (20) ;
la première unité de détection (11) étant conçue pour détecter un élément de marquage (32) correspondant au dispositif de charge (30) ;
l'unité de commande (13) étant conçue pour effectuer un positionnement spatial du dispositif de fixation (20) par rapport au dispositif de charge (30) sur la base de l'élément de marquage (32) détecté ;
**caractérisé en ce que**
l'élément de marquage (32) contient une information sur un processus de déplacement pour la fixation du dispositif de charge (30) sur le dispositif de fixation (20) ;
l'unité de commande (13) étant conçue pour déplacer le dispositif de fixation (20) selon le processus de déplacement sur la base de ladite information.

2. Système de transport (1) selon la revendication 1,
l'unité de commande (13) étant conçue pour effectuer un positionnement du dispositif de transport (10) par rapport au dispositif de charge (30) sur la base de l'élément de marquage (32) détecté.

3. Système de transport (1) selon l'une quelconque des revendications précédentes,
l'unité de commande (13) étant conçue pour tirer de l'élément de marquage (32) détecté une information correspondant au dispositif de charge (30) et pour effectuer un positionnement du dispositif de fixation (20) par rapport au dispositif de charge (30) sur la base de l'information tirée.

4. Système de transport (1) selon l'une quelconque des revendications précédentes, ledit système de transport comportant :
une unité de mémorisation (15), dans laquelle un algorithme de commande prédéfini est mémorisé ;
l'algorithme de commande prédéfini définissant un processus de déplacement du dispositif de fixation (20) ;
l'unité de commande (13) étant conçue pour effectuer le positionnement spatial du dispositif de fixation (20) par rapport au dispositif de charge (30) sur la base de l'algorithme de commande prédéfini.

5. Système de transport (1) selon l'une quelconque des revendications précédentes,
l'écart (d) de la position réelle (11a) du dispositif de fixation (20) par rapport à la position théorique (11b) du dispositif de fixation (20) dépendant d'un déplacement par oscillation du dispositif de fixation (20) par rapport au dispositif de charge (30).

6. Système de transport (1) selon l'une quelconque des revendications précédentes,
le dispositif de fixation (20) étant fixé de manière mobile sur le dispositif de transport (10) par l'intermédiaire d'un composant (40) de type câble.

7. Système de transport (1) selon l'une quelconque des revendications précédentes,
la première unité de détection (11) étant installée sur le dispositif de transport (10).

8. Système de transport (1) selon l'une quelconque des revendications précédentes, ledit système de transport comportant :
une deuxième unité de détection (12), laquelle est installée sur le dispositif de fixation (20).

9. Système de transport (1) selon l'une quelconque des revendications précédentes,
l'élément de marquage (32) étant choisi dans le groupe comprenant : une géométrie tridimensionnelle, un modèle bidimensionnel, un code bidimensionnel, un code couleur, un QR code ou un code à barres.

10. Système de transport (1) selon l'une quelconque des revendications précédentes,
la première unité de détection (11) utilisant un procédé de détection optique, un procédé de détection électro-optique, un procédé de détection infrarouge ou un procédé de détection de signaux radio ; et/ou
la deuxième unité de détection (12) utilisant un procédé de détection optique, un procédé de détection électro-optique, un procédé de détection infrarouge ou un procédé de détection de signaux radio.

11. Aéronef (100) comprenant un système de transport (1) selon l'une quelconque des revendications précédentes.

12. Procédé de commande d'un système de transport (1), ledit procédé comportant les étapes suivantes :
fournir un dispositif de transport (10) (S1) ;
fixer de manière mobile un dispositif de fixation (20) sur le dispositif de transport (20) (S2) ;
déterminer un écart (d) d'une position réelle (11a) du dispositif de fixation (20) par rapport à une position théorique (11b) du dispositif de fixation (20) au moyen d'une première unité de détection (11) (S3) ;
influer sur un déplacement du dispositif de fixation (20) pour compenser l'écart (d) déterminé de la position réelle (11a) du dispositif de fixation (20) par rapport à la position théorique (11b) du dispositif de fixation (20) (S4) ;
détecter un élément de marquage (32) correspondant au dispositif de charge (30) au moyen de la première unité de détection (11) (S5) ;
positionner spatialement le dispositif de fixation (20) par rapport au dispositif de charge (30) sur la base de l'élément de marquage (32) détecté (S6) ;
**caractérisé en ce que**
l'élément de marquage (32) contient une information sur un processus de déplacement pour la fixation du dispositif de charge (30) sur le dispositif de fixation (20) ;
l'unité de commande (13) étant conçue pour déplacer le dispositif de fixation (20) selon le processus de déplacement sur la base de ladite information.
